# EUROPÄISCHE PATENTSCHRIFT

(11) **EP 3 826 901 B1**
(45) Veröffentlichungstag und Bekanntmachung des Hinweises auf die Patenterteilung: **19.10.2022**
(21) Anmeldenummer: 19755810.9
(22) Anmeldetag: 23.07.2019
(51) Int. Cl.: B62D 7/04, B62D 61/06, B62D 7/15, B62D 63/02

(54) **SELBSTFAHRENDES ARBEITSGERÄT**
SELF-PROPELLED IMPLEMENT
APPAREIL DE TRAVAIL AUTOMOTEUR

(30) Priorität: 25.07.2018 DE 102018117935
(43) Veröffentlichungstag der Anmeldung: 02.06.2021
(73) Patentinhaber: BAUHAUS-UNIVERSITÄT WEIMAR, 99423 Weimar (DE)
(72) Erfinder: RIEKE, Michael, 06108 Halle (DE); MÜHLENBEREND, Andreas, 99423 Weimar (DE); WILLMANN, Jan Sebastian, 99425 Weimar (DE); KARGUTH, Andreas, 99869 Tüttleben (DE)
(74) Vertreter: Engel, Christoph Klaus
(86) Internationale Anmeldenummer: PCT/EP2019/069795
(87) Internationale Veröffentlichungsnummer: WO 2020/020885

(56) Entgegenhaltungen:
- EP-A1- 3 023 544
- WO-A1-2012/008622
- WO-A1-2013/076425
- WO-A1-2016/199176
- DE-A1- 1 954 104
- GB-A- 767 420
- US-A- 4 558 758
- US-A1- 2014 327 221

## Beschreibung

Die vorliegende Erfindung betrifft ein selbstfahrendes Arbeitsgerät, welches sich zum Einsatz auf landwirtschaftlichen Nutzflächen eignet. Mit dem Arbeitsgerät lassen sich unterschiedliche Werkzeuge oder Arbeitsmittel ohne mitfahrende Bedienperson transportieren, sodass das Arbeitsgerät auch als autonomes Trägerfahrzeug verstanden werden kann, welches sich für die speziellen Anforderungen auf landwirtschaftlichen Nutzflächen eignet. Das Arbeitsgerät besitzt einen Tragrahmen und drei Gestellarme mit daran befestigten Rädern. Weiterhin ist eine Steuereinheit vorgesehen, welche in Abhängigkeit von einem Fahrprogramm und/oder einer Fernbedienung sämtliche Funktionen des Arbeitsgeräts steuert. Die Steuereinheit ist dabei auch in der Lage, Signale von Sensoren, die am Arbeitsgerät befestigt sind, auszuwerten und in die Steuerung einzubeziehen. Die Erfindung betrifft außerdem eine Arbeitsgerätegruppe, die aus mehreren miteinander gekoppelten selbstfahrenden Arbeitsgeräten besteht.

Ein derartiges selbstfahrendes Arbeitsgerät eignet sich insbesondere zum Transport von Werkzeugen, Materialien und Arbeitsmitteln an vorbestimmte Arbeitsorte, die auf einer zu bearbeitenden landwirtschaftlichen Fläche verteilt sein können. Somit betrifft die Erfindung das Gebiet von selbstfahrenden Arbeitsgeräten, die im Bereich der Landwirtschaft eingesetzt werden, um Arbeitsaufgaben auf landwirtschaftlich, forstwirtschaftlich oder gartenbaulich genutzten Flächen auszuführen, ohne dass das Bedienpersonal auf dem Arbeitsgerät mitfahren muss. Derartige Arbeitsgeräte sind dazu mit den jeweils erforderlichen Werkzeugen, Materialien oder Arbeitsmitteln ausgerüstet, beispielsweise um den Boden zwischen einzelnen Pflanzen aufzulockern, Unkraut zu entfernen oder Düngemittel gezielt an den Nutzpflanzen einzubringen. Ein Transport von Personen ist stattdessen mit dem hier beschriebenen Arbeitsgerät nicht angestrebt. Bei der Ausführung von landwirtschaftlichen Aufgaben geht es primär darum, den Bodendruck durch eine geringe Masse des Arbeitsgerätes und angepasste Parameter der Bereifung so klein wie möglich zu halten. Weiterhin geht es auch darum, die Anzahl der Fahrspuren zu minimieren, um Nutzpflanzen nicht zu beschädigen, die Breite der einzelnen Fahrspur so schmal wie möglich zu gestalten und den Boden der landwirtschaftlichen Nutzfläche möglichst wenig zu verdichten oder anderweitig unerwünscht zu verändern.

Ein vierrädriger Roboter für landwirtschaftliche Aufgaben ist beispielsweise beschrieben in "Robot farmers are the future of agriculture, says government", veröffentlicht unter https://www.theguardian.com/environment/2014/jan/09/robotsfarm-future

Aus der US 5,517,098 A ist eine automatisierte mobile Plattform bekannt, die drei Räder verwendet, welche jeweils in einer eigenen Fahrspur laufen, wenn das Fahrzeug in Betrieb ist. Die beiden hinteren Räder sind an schwenkbaren Gestellarmen befestigt, die zur Fahrzeugmitte geschwenkt werden können, wenn das Fahrzeug nicht in Betrieb ist und platzsparend abgestellt oder verstaut werden soll. Dieses autonome Fahrzeug wird beispielsweise als Golf-Caddy verwendet und kann automatisch einem Zielsender folgen, der vom Benutzer mitgeführt wird.

Die US 4,558,758 zeigt eine Hebebühne mit einem Fahrgestell, welches drei veränderliche Radausleger besitzt, an denen jeweils Räder montiert sind. Die veränderlichen Radausleger gestatten den Einsatz der Hebebühne in unebenem Gelände.

In der WO 2016/199 176 A1 ist ein Arbeitsgerät mit drei Gestellarmen beschrieben, die an einer zentralen Plattform befestigt sind. Mindestens einer der Gestellarme ist schwenkbar. An den Armen sind Kettenlaufwerke angebracht, die einzeln um Steuerachsen verschwenkt werden können. Das Trägerfahrzeug ist aufgrund der gewählten Kettenlaufwerke vergleichsweise schwer und führt zu einer erheblichen Beanspruchung des überfahrenen Bodens, sodass es sich für den landwirtschaftlichen Einsatz auf bepflanzten Flächen nicht eignet.
Dokument WO 2012/008622 A1 offenbart ein selbstfahrendes Arbeitsgerät gemäß dem Oberbegriff des Patentanspruchs 1.

Eine Aufgabe der vorliegenden Erfindung besteht darin, ein verbessertes selbstfahrendes Arbeitsgerät bereitzustellen, welches unter anderem den Transport von Werkzeugen und Arbeitsmitteln gestattet und sich insbesondere für den Einsatz auf landwirtschaftlichen Nutzflächen eignet. Es soll flexibel an die jeweils zu erledigenden Arbeitsaufgaben anpassbar sein, eine geringe mechanische Bodenbeeinflussung bewirken und eine Schädigung von Nutzpflanzen während der Fahrt weitgehend vermeiden. Eine weitere Aufgabe wird darin gesehen, eine Arbeitsgerätegruppe bereitzustellen, welche mehrere selbstfahrende Arbeitsgeräte umfasst und dadurch die Erhöhung der Arbeitsleistung ermöglicht.

Diese Aufgaben werden gelöst durch ein selbstfahrende Arbeitsgerät gemäß dem beigefügtem Anspruch 1 und eine Arbeitsgerätegruppe gemäß Anspruch 15.

Die vorliegende Erfindung beruht zunächst auf der Erkenntnis, dass die aus dem Stand der Technik bekannten Fahrzeuge, die für landwirtschaftliche Arbeitsaufgaben eingesetzt werden, regelmäßig zweispurig aufgebaut sind und an den spezifischen Anwendungsfall angepasst sind, wobei die Spurbreite so eingestellt ist, dass die mindestens zwei Spuren des Fahrzeugs zwischen den Pflanzenreihen verlaufen, wobei in jeder Fahrspur mindestens zwei Räder des Fahrzeugs geführt sind. Dies beschränkt den Einsatz der jeweiligen Fahrzeuge auf einen fest eingestellten Abstand der Fahrspuren (nachfolgend auch als Spurabstand bezeichnet), der abhängig ist von der Art der Pflege oder des Monitorings der jeweiligen Nutzpflanzen. Für unterschiedliche Aufgaben bzw. Bepflanzungen müssen daher zahlreiche verschiedene Fahrzeuge bereitgehalten werden. Vier- oder mehrrädrige Fahrzeuge haben außerdem den Nachteil einer vergleichsweise geringen Wendigkeit. Während beispielsweise von Mährobotern auch dreispurige Trägerfahrzeuge bekannt sind, scheint der Einsatz von Fahrzeugen mit lediglich drei Rädern für den Anwendungsfall der Nutzpflanzenpflege nicht geeignet, denn die dritte Spur verhindert oder erschwert ein Fahren des Fahrzeugs entlang von langgestreckten Nutzpflanzenreihen. Ein Kerngedanke der vorliegenden Erfindung besteht ausgehend von diesen Problemen darin, das selbstfahrende Arbeitsgerät mit nur drei bzw. genau drei Rädern auszurüsten, die an drei Gestellarmen befestigt sind, wobei die Gestellarme und die daran angebrachten Räder derart ausgerichtet werden können, dass das Arbeitsgerät nur zwei Fahrspuren benötigt, wobei der Spurabstand zwischen diesen beiden Fahrspuren sehr einfach einstellbar und damit an den Anwendungsfall spezifisch anpassbar ist. Der Spurabstand kann dabei sogar während des Einsatzes des Arbeitsgerätes angepasst werden, wenn sich die Spurbreite zwischen Pflanzenreihen ändert.

Umgesetzt wird dieser Kerngedanke durch das erfindungsgemäße Arbeitsgerät, welches drei Gestellarme besitzt, die sich ausgehend von einem Tragrahmen in unterschiedlichen Winkelrichtungen erstrecken, wobei mindestens ein erster Gestellarm gegenüber den beiden anderen Gestellarmen, vorzugsweise um eine Zentralachse schwenkbar ist. Vorzugsweise sind zwei Gestellarme, besonders bevorzugt alle drei Gestellarme um die Zentralachse schwenkbar.

Erfindungsgemäß ist der zentrale Tragrahmen durch ein Zentralgelenk gebildet, welches die drei Gestellarme einerseits stabil koppelt, andererseits das Schwenken von mindestens zwei Gestellarmen gegenüber dem dritten Gestellarm gestattet. Das Zentralgelenk gestattet das Verschwenken von zwei Gestellarmen gegenüber dem dritten Gestellarm um jeweils mehr als 90°. Dadurch ist es nicht nur möglich, den Spurabstand einzustellen, sondern darüber hinaus die beiden schwenkbaren Gestellarme nahezu parallel zu dem dritten Gestellarm zu positionieren, um das Arbeitsgerät mit minimalem Platzbedarf lagern und transportieren zu können.

Darüber hinaus umfasst das Arbeitsgerät mindestens einen Armantrieb, der das Schwenken des ersten Gestellarmes um die Zentralachse ermöglicht. Die um die Radachse drehbaren drei Räder sind jeweils an einem der Gestellarme angebracht, wobei dies an mindestens zwei der Räder unter Verwendung jeweils einer Steuerachse erfolgt, die senkrecht zu den Radachsen verläuft. Dadurch sind mindestens zwei der Räder um die Steuerachse schwenkbar. Weiterhin sind mindestens zwei Steuerachsenantriebe vorgesehen, die das gesteuerte Verschwenken der einzelnen Räder um ihre Steuerachse ermöglichen. Jedes Rad besitzt darüber hinaus einen eigenen Radantrieb für einen geschwindigkeitsgeregelten Betrieb.

Eine Steuereinheit des Arbeitsgeräts steuert die Radantriebe, den mindestens einen Armantrieb und die mindestens zwei Steuerachsenantriebe an, um das Arbeitsgerät mit einer gewünschten Geschwindigkeit und unter Beibehaltung des gewünschten Abstandes der Fahrspuren verfahren zu können. Die Steuereinheit ist dabei in der Lage, angepasst auf den jeweiligen Betriebszustand, die Spurbreite und/oder die Winkelstellung der Räder an den Steuerachsen kontinuierlich zu verändern, wenn ein anderer Spurabstand benötigt wird, wenn ein Wechsel der Fahrtrichtung gewünscht ist oder wenn eine andere Arbeitsaufgabe zu erfüllen ist.

Ein wesentlicher Vorteil des erfindungsgemäßen selbstfahrenden Arbeitsgeräts ist darin zu sehen, dass mit Hilfe des Tragrahmens und der Gestellarme ein stabiler, robuster Aufbau möglich ist, der gleichzeitig ein geringes Gewicht aufweist, da nur drei Räder verwendet werden und aufgrund der Einzelantriebe an den Rädern auf ein kompliziertes Getriebe- und Steuersystem verzichtet werden kann. Stattdessen werden die gewünschten Lenkeinstellungen zur Richtungssteuerung für das Arbeitsgerät direkt über die geschwindigkeitsgeregelten Radantriebe realisiert. Ein weiterer Vorteil besteht darin, dass trotz eines dreirädrigen Aufbaus lediglich zwei Fahrspuren für eine Geradeausbewegung benötigt werden. Wenn eine Drehung des Arbeitsgeräts, beispielsweise beim Wenden oder zur Erfüllung spezieller Arbeitsaufgaben gewünscht ist, kann das Arbeitsgerät auf nur einer einzigen kreisförmigen Fahrspur oder auf einer Fahrspur um ein fixiertes Rad bewegt werden. Im Übrigen gestattet das Arbeitsgerät die Erfüllung unterschiedlichster Arbeitsaufgaben, da es mit verschiedenen Werkzeugen oder Arbeitsmitteln ausgerüstet werden kann.

Eine erfindungsgemäße Ausführungsform des Arbeitsgeräts zeichnet sich dadurch aus, dass alle drei Gestellarme in einem vorbestimmten Winkelbereich schwenkbar sind. Das Verschwenken der Gestellarme erfolgt um eine gemeinsame Zentralachse. In einer abgewandelten Ausführungsform werden die Gestellarme um verteilt angeordnete Achsen geschwenkt, wobei sich in diesem Fall eine virtuelle Zentralachse definieren lässt. Das Verschwenken der Gestellarme kann durch einen einzigen Armantrieb bewirkt werden, der selektiv oder gleichzeitig auf einen oder mehrere Gestellarme einwirkt. Alternativ können mehrere Armantriebe genutzt werden, sodass jedem Gestellarm ein eigener Armantrieb zugeordnet ist. Wesentlich ist in allen Fällen, dass mit Hilfe des Armantriebs die Winkelstellung des Gestellarms gegenüber der Zentralachse veränderbar ist, wodurch sich der Abstand zwischen den Steuerachsen bzw. den Rädern variieren lässt, um einen gewünschten Spurabstand einzustellen.

Erfindungsgemäß ist die Steuereinheit des Arbeitsgeräts derart konfiguriert, dass je nach gewählter Winkelstellung der Gestellarme die Steuerachsenantriebe nachgeführt werden, um die Räder an den Steuerachsen zu verschwenken, sodass auch bei verändertem Spurabstand jeweils zwei der Räder in einer gemeinsamen ersten Spur ausgerichtet sind und das dritte Rad in einer zweiten Spur, parallel zur ersten Spur ausgerichtet ist. Damit ist auch bei wechselndem Spurabstand eine Geradeausfahrt des Arbeitsgeräts auf nur zwei Spuren sichergestellt.

Eine abgewandelte Ausführungsform besitzt Gestellarme, die längenveränderlich sind. Ebenfalls ist es möglich, einen einzelnen oder mehrere Gestellarme des Arbeitsgeräts auszutauschen gegen Gestellarme mit anderen Längen. Auf diese Weise kann das Arbeitsgerät noch flexibler an sehr unterschiedliche Spurabstände angepasst werden, sodass sich der Einsatzbereich weiter steigern lässt.

Weiterhin ist es vorteilhaft, wenn die Steuereinheit konfiguriert ist, um in bestimmten Betriebszuständen die Steuerachsenantriebe anzusteuern, sodass die Räder winklig zueinander stehen und alle drei Räder in einer gemeinsamen Kreisspur ausgerichtet sind. Auf diese Weise ist beispielsweise eine Drehung/Wendung des Arbeitsgeräts auf der Stelle möglich. Beispielsweise könnte dies vorteilhaft sein, wenn mit einem am Arbeitsgerät angebrachten Werkzeug das Erdreich am gesamten Umfang einer Nutzpflanze aufgelockert werden soll.

Gemäß einer bevorzugten Ausführungsform sind am Tragrahmen oder an den Gestellarmen des Arbeitsgeräts Koppelelemente angebracht, die eine Ankopplung unterschiedlichster Werkzeuge oder Arbeitsmittel gestatten. Vorzugsweise handelt es sich um hydraulische oder elektromechanische Koppelelemente, deren mechanische Verbindung über hydraulische oder elektrische Stellglieder hergestellt oder aufgelöst werden kann. Bevorzugt übernimmt die Steuereinheit des Arbeitsgeräts auch die Ansteuerung der Koppelelemente.

Eine zweckmäßige Ausführungsform des Arbeitsgeräts besitzt ein Zentralgehäuse als Bestandteil des Tragrahmens, wobei von diesem Zentralgehäuse ausgehend die drei Gestellarme sich radial nach außen erstrecken. Vorzugsweise verläuft die Zentralachse durch das Zentralgehäuse und der Armantrieb ist im Zentralgehäuse angeordnet. Weiterhin kann das Zentralgehäuse einen Energiespeicher und Getriebeelemente enthalten, mit denen das Verschwenken der Gestellarme bewirkt wird.

Wenn bei der oben bereits erwähnten abgewandelten Ausführungsform der Tragrahmen lediglich durch ein Zentralgelenk gebildet ist, so werden die Energiespeicher und ggf. weitere Element an den Gestellarmen angeordnet. Bevorzugt sind die Gestellarme in der Art von Gitterträgern gestaltet.

Es versteht sich, dass die Antriebe des Arbeitsgeräts mit Energie versorgt werden müssen. Bevorzugt umfasst das Arbeitsgerät daher auch einen Energiespeicher, insbesondere einen elektrischen Akkumulator. Der Energiespeicher ist gemäß einer bevorzugten Ausführungsform wechselbar, sodass ein schneller Austausch erfolgen kann, wenn der Speicher geleert ist. Weiterhin ist es zweckmäßig, wenn dieser Energiespeicher on-board über Solarzellen, eine Brennstoffzelle oder einen Stromgenerator aufgeladen werden kann, die ebenfalls Bestandteil des Arbeitsgeräts sein können. Alterativ kann der Energiespeicher über ein elektrisches Ladegerät aus anderen stationären Versorgungseinheiten (z. B. aus dem Stromnetz) aufgeladen werden.

Eine erfindungsgemäße Arbeitsgerätegruppe umfasst mindestens zwei selbstfahrende Arbeitsgeräte gemäß den zuvor beschriebenen Ausführungsformen oder einer Kombination aus diesen, wobei die einzelnen Arbeitsgeräte elektromechanisch bzw. mechanisch und/oder über eine Datenverbindung miteinander gekoppelt sind, um aufeinander abgestimmt verfahrbar zu sein. Im einfachsten Fall besteht eine starre mechanische Kopplung zwischen zwei selbstfahrenden Arbeitsgeräten und eine Datenverbindung zwischen den beiden Arbeitsgeräten, sodass die Steuerung der beiden Fahrzeuge abgestimmt erfolgt. Mithilfe der Arbeitsgerätegruppe können auf diese Weise große Flächen besonders schnell und effizient bearbeitet werden. Ein Zweck der Kopplung mehrerer Arbeitsgeräte besteht in der koordinierten Ausführung bestimmter landwirtschaftlicher Arbeiten. Außerdem können durch diese Kopplung größeren Lasten auf mehrere Arbeitsgeräte verteilt werden.

Weitere Vorteile, Einzelheiten und Weiterbildungen der vorliegenden Erfindung ergeben sich aus der nachfolgenden Beschreibung bevorzugter Ausführungsformen, unter Bezugnahme auf die Zeichnung. Es zeigen:
- Fig. 1: eine perspektivische Ansicht einer ersten Ausführungsform eines erfindungsgemäßen selbstfahrenden Arbeitsgeräts;
- Fig. 2: eine Draufsicht auf eine zweite Ausführung des Arbeitsgeräts, mit Darstellung mehrerer einzunehmender Winkelpositionen eines Gestellarmes;
- Fig. 3: eine Draufsicht auf das Arbeitsgerät gemäß Fig. 2, in einem Betriebszustand zur Ausführung einer Drehbewegung auf einer einzelnen Kreisspur;
- Fig. 4: eine dritte Ausführungsform des Arbeitsgeräts in einer Seitenansicht mit angebrachten Arbeitsbehältern;
- Fig. 5: eine Draufsicht einer vierten Ausführungsform des Arbeitsgeräts mit einem Zentralgelenk und an den Gestellarmen angebrachten Energiespeichern in einem entfalteten Zustand;
- Fig. 6: eine Draufsicht der Ausführungsform gemäß Fig. 5 in einem zusammengefalteten Zustand;
- Fig. 7: eine perspektivische Detailansicht des Zentralgelenks der Ausführungsform gemäß Fig. 5;
- Fig. 8: drei Betriebsvarianten der Ausführungsform gemäß Fig. 5 mit unterschiedlichen Spurbreiten;
- Fig. 9: eine Seitenansicht der Ausführungsform gemäß Fig. 5 im zusammengefalteten Zustand beim Transport durch einen Benutzer.

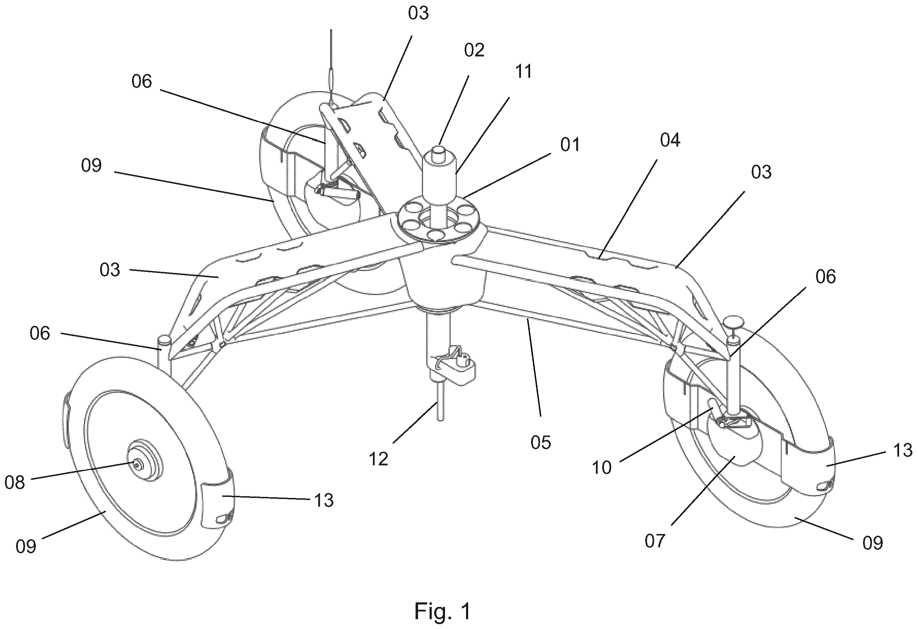

Fig. 1 zeigt eine beispielhafte Ausführungsform eines erfindungsgemäßen selbstfahrenden Arbeitsgeräts in einer vereinfachten perspektivischen Ansicht. Das Arbeitsgerät besitzt einen Tragrahmen, der im dargestellten Beispiel als ein Zentralgehäuse 01 ausgeformt ist. Das Zentralgehäuse 01 befindet sich im Zentrum des Fahrzeugs und definiert eine Zentralachse 02, die senkrecht durch die Haupterstreckungsebene des Tragrahmens verläuft. Der Tragrahmen kann in abgewandelten Ausführungsformen plattenförmig oder durch mehrere Verstrebungen gebildet sein oder in sonstiger Weise an den jeweiligen Einsatzzweck angepasst werden.

Ausgehend vom Tragrahmen bzw. Zentralgehäuse 01 erstrecken sich drei Gestellarme 03 radial nach außen in verschiedene Winkelrichtungen. Im dargestellten Beispiel sind alle drei Gestellarme 03 um einen vorbestimmten Winkelbereich um die Zentralachse 02 schwenkbar, wozu sich ein Armantrieb (nicht gezeigt) innerhalb des Zentralgehäuses 01 befindet. Außerdem ist eine Steuereinheit (nicht gezeigt) im Zentralgehäuse 01 untergebracht, welche programmgesteuert sämtliche Steuerungsfunktion für das Arbeitsgerät übernimmt. Bevorzugt lassen sich die Gestellarme 03 jeweils um etwa 90 Grad um die Zentralachse 02 schwenken. Insbesondere ist der Schwenkbereich so ausgestaltet, dass im Ruhezustand des Arbeitsgeräts zwei Gestellarme aneinander gelegt werden können und der dritte Gestellarm in der Verlängerung der Mittellinie zwischen den beiden aneinander liegenden Gestellarmen positionierbar ist, sodass das Arbeitsgerät sehr flach zusammengefaltet werden kann, um es zu deponieren oder zu transportieren.

Die Gestellarme 03 können ebenfalls tragende Funktionen übernehmen und dadurch zu einem funktionalen Bestandteil des Tragrahmens werden. Dazu sind beispielsweise Befestigungsöffnungen 04 als Koppelelemente an den Gestellarmen 03 angebracht. Für eine erhöhte Stabilität des Arbeitsgeräts können außerdem Querverstrebungen 05 zwischen dem Zentralgehäuse 01 und den radial außen liegenden Enden der Gestellarme 03 verlaufen.

An den radial äußeren Enden der Gestellarme 03 befindet sich jeweils eine Steuerachse 06, die parallel zur Zentralachse 02 verläuft. An den zur Aufstandsfläche des Arbeitsgeräts gewandten Enden der Steuerachsen 06 ist jeweils eine Radaufhängung 07 befestigt, die eine Radachse 08 umfasst. Um die Radachse 08 ist jeweils ein Rad 09 drehbar gelagert. Jedes Rad ist von einem eigenen Radantrieb angetrieben, der im dargestellten Beispiel als Nabenmotor ausgelegt ist. Der Nabenmotor(nicht gezeigt) wird von der zentralen Steuereinheit des Arbeitsgeräts gesteuert.

Gemäß einer abgewandelten Ausführungsform sind die Räder 09 an den äußeren Enden der Gestellarme 03 jeweils höhenverstellbar gelagert. Die Höhenverstellung kann beispielsweise in den Steuerachsen 06 integriert sein und gestattet es, jedes Rad relativ zu den beiden anderen Rädern in seiner horizontalen Position zu verändern. Auf diese Weise kann das Arbeitsgerät an starke Bodenunebenheiten, wie sie auf land- oder forstwirtschaftlichen Nutzflächen auftreten können, angepasst werden.

Um die Spurbreite des Arbeitsgeräts variieren zu können, wird mindestens einer der Gestellarme um die Zentralachse 02 geschwenkt. Damit das Fahrzeug möglichst flexibel gesteuert werden kann, sind vorzugsweise mindestens zwei der Gestellarme um die Zentralachse schwenkbar. Bei abgewandelten Ausführungsformen sind alle drei Gestellarme um die Zentralachse schwenkbar. Damit die Radstellung an die ausgewählte Winkelstellung der Gestellarme angepasst werden kann, sind mindestens die an den schwenkbaren Gestellarmen angebrachten Räder um ihre Steuerachsen drehbar, wozu jeweils ein Steuerachsenantrieb 10 vorgesehen ist. Bevorzugt sind alle drei Räder um ihnen zugehörige Steuerachsen drehbar.

In abgewandelten Ausführungsformen ist es auch möglich, dass ein oder zwei der Gestellarme nur manuell verschwenkt und in der gewünschten Position fixiert werden können, während der verbleibende dritte Gestellarm mit Hilfe des Armantriebs zum Schwenken um die Zentralachse veranlasst werden kann. Auf diese Weise kann eine Grundeinstellung manuell vor dem Einsatz des Arbeitsgeräts vorgenommen werden und die weiteren für die gesteuerte Fahrt erforderlichen Bewegungen werden von den genannten Antrieben ausgeführt.

Das Arbeitsgerät umfasst darüber hinaus einen oder mehrere Sensoren 11, die beispielsweise der Bestimmung von Position und Geschwindigkeit oder auch der Erfassung von Umgebungsparametern dienen. Außerdem ist üblicherweise mindestens ein Arbeitsmittel am Arbeitsgerät angebracht, beispielsweise eine Sonde 12, die zum Beispiel Bodenparameter in unmittelbarer Nähe einer Nutzpflanze bestimmt.

Als Räder 09 eignen sich luftbereifte Räder mit an die Bodenverhältnisse angepasstem Profil. Der jeweils ein Rad antreibenden Nabenmotor umfasst vorzugsweise einen Encoder zur Ermittlung der aktuellen Geschwindigkeit des Arbeitsgeräts. Am Rad 09 kann ein Schmutzabstreifer 13 befestigt sein, durch welchen zu starke Anhaftungen von Erdreich verhindert werden. Dieser Schmutzabstreifer kann auch als Not-Stop-Sensor ausgelegt werden.

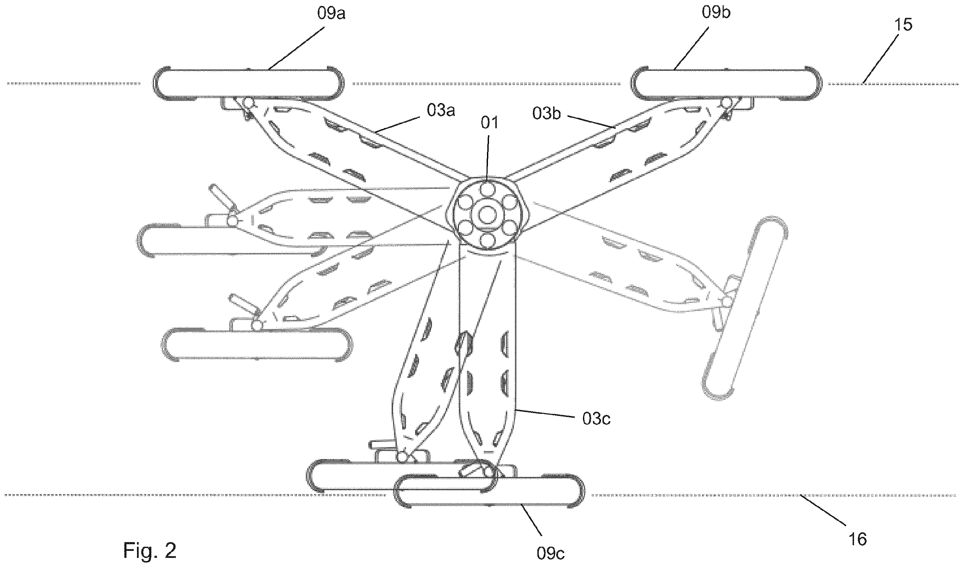

Fig. 2 zeigt eine zweite Ausführungsform des Arbeitsgeräts in einer vereinfachten Ansicht von oben. Ein erster Gestellarm 03a und ein zweiter Gestellarm 03b sind fest oder nur manuell verstellbar am Zentralgehäuse 01 angebracht. Die an dem ersten und zweiten Gestellarm befestigten Räder 09a und 09b sind in einer gemeinsamen ersten Spur 15 ausgerichtet. Ein dritter Gestellarm 03c ist motorisch schwenkbar am Zentralgehäuse 01 befestigt, wobei in der Darstellung mehrere mögliche Schwenkpositionen des dritten Gestellarmes 03c gezeigt sind. Um eine Geradeausfahrt zu ermöglichen, wird das Rad 09c am dritten Gestellarm 03c um seine Steuerachse 06 derart verdreht, dass es auf einer zweiten Spur 16 ausgerichtet ist, welche parallel zur ersten Spur 15 verläuft. Dieser Parallellauf ist bei variabler Spurbreite durch Verschwenken des dritten Gestellarms und gleichzeitiges Verdrehen des Rads um seine Steuerachse möglich. Wenn stattdessen ein anderer Betriebszustand hergestellt werden soll, beispielsweise eine Blockade gegen unbeabsichtigtes Wegrollen des Arbeitsgeräts, kann das dritte Rad 09c winklig zu der ersten Spur 15 des ersten und zweiten Rades gestellt werden.

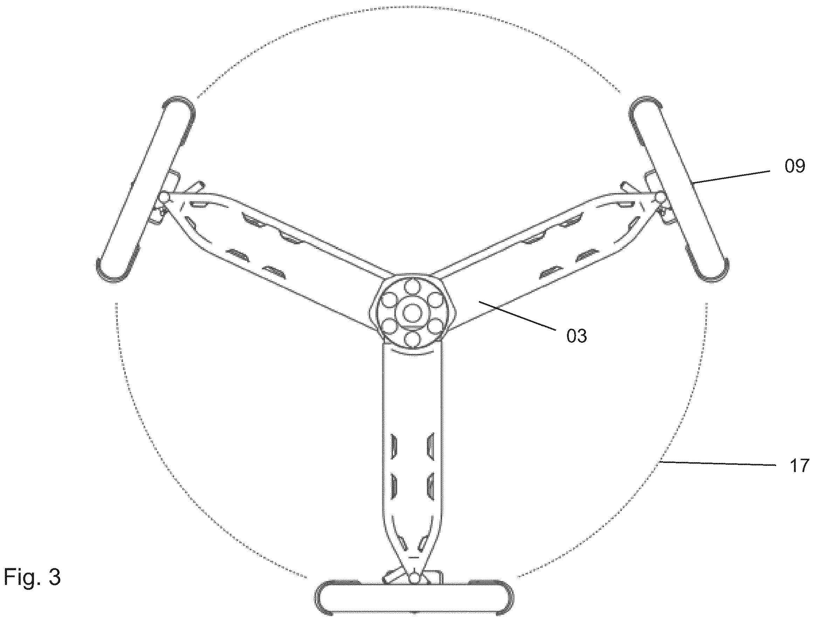

Fig. 3 zeigt in einer Ansicht von oben einen veränderten Betriebszustand des Arbeitsgeräts, bei welchem eine Bewegung auf einer einzelnen Kreisspur 17 ermöglicht ist. Dazu werden die Gestellarme 03 beispielsweise mit einem Winkel von jeweils 120 Grad Versatz zueinander eingestellt, während die Räder 09 um die Steuerachse 06 gedreht werden, sodass sie etwa senkrecht zur Längsachse der Gestellarme 03 stehen. Wenn dann alle drei Räder gleichmäßig von den jeweils zugeordneten Radantrieben angetrieben werden, rotiert das Arbeitsgerät auf der Stelle, etwa um die Zentralachse 02. In abgewandelten Ausführungen ist es durch entsprechende Ansteuerung der jeweiligen Antriebe auch möglich, die Drehachse für das Arbeitsgerät außerhalb der Zentralachse zu positionieren. Beispielsweise kann eines der drei Räder blockiert werden, sodass die Drehachse des Arbeitsgeräts durch die Aufstandsfläche des blockierten Rads verläuft.

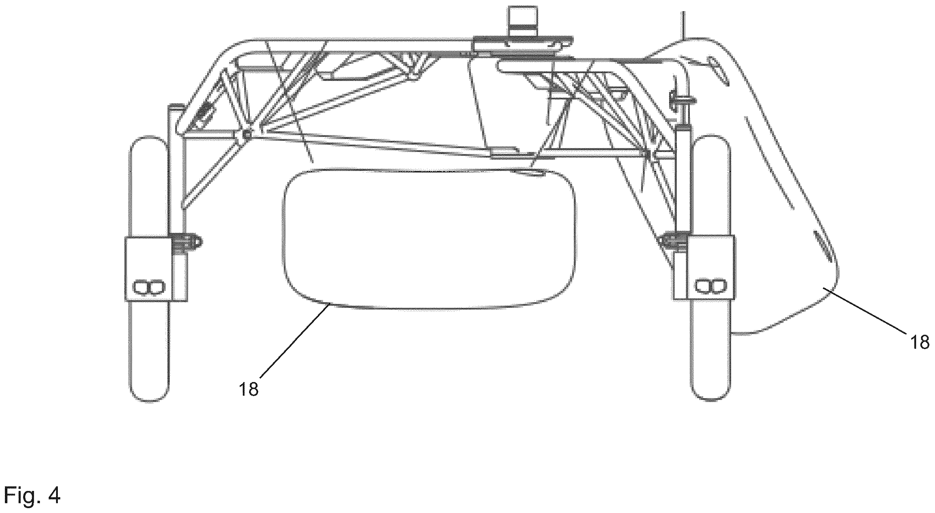

Fig. 4 zeigt in einer seitlichen Ansicht eine abgewandelte Ausführungsform des Arbeitsgeräts. Es ist hier ein zweispuriger Betriebszustand eingestellt, d. h. zwei der Räder 09 sind auf der ersten Spur ausgerichtet, während das dritte Rad parallel dazu auf der zweiten Spur ausgerichtet ist. Der Hauptunterschied zu der in Fig. 1 gezeigten Ausführungsform besteht darin, dass am Arbeitsgerät zwei Behälter 18 angebracht sind, die beispielsweise dem Transport von Düngemittel dienen.

Es ist ersichtlich, dass das Arbeitsgerät mit zahlreichen Optionen ausgerüstet werden kann. Beispielsweise lässt sich ein Radarsystem anbringen, um zur Vermeidung von Kollisionen den Fernbereich des Fahrzeugs zu überwachen. Ebenso können Ultraschallsensoren für die Überwachung des Nahbereichs genutzt werden. In vielen Fällen werden integrierte Kraft-Moment-Sensoren Anwendung finden, um die an den Rädern bzw. den Gestellarmen auftretenden Kräfte erfassen und in die Steuerung einbeziehen zu können. Weiterhin ist es möglich, satellitengestützte Navigationssysteme zu nutzen und dafür GPS-Sensoren am Fahrzeug anzubringen. Schließlich ist es erforderlich, eine geeignete Energiequelle für die Versorgung der genannten Antriebe mitzuführen. Dafür eignen sich beispielsweise Akkumulatoren, die im Zentralgehäuse bzw. am Tragrahmen befestigt sind.

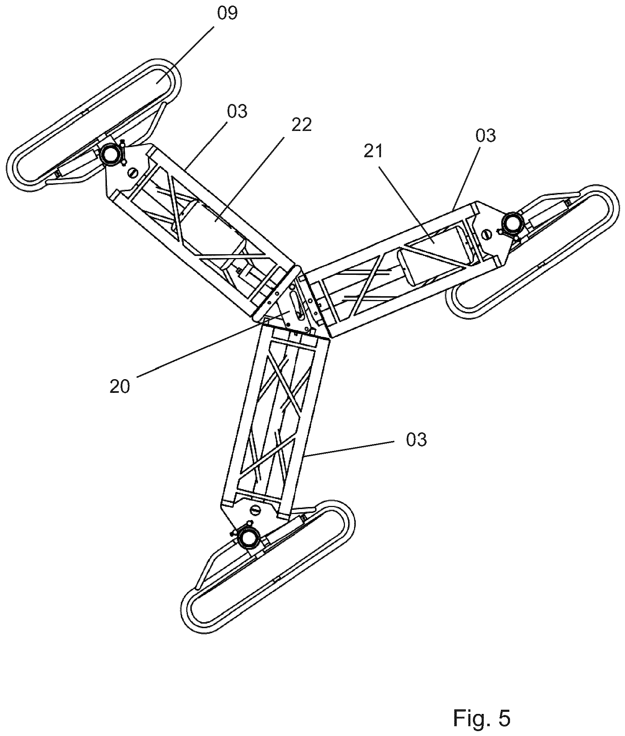

Fig. 5 zeigt in einer Draufsicht eine weitere Ausführungsform des selbstfahrenden Arbeitsgeräts. Der Tragrahmen ist in diesem Fall durch ein Zentralgelenk gebildet, welches die drei Gestellarme 03 jeweils an ihren innenliegenden Enden miteinander verbindet. Die Gestellarme 03 stehen in dem dargestellten Betriebszustand winklig zueinander. Das Zentralgelenk 20 trägt aufgrund seiner minimalen Baugröße weiter dazu bei, das Arbeitsgerät insgesamt sehr leicht werden zu lassen, ohne dass dadurch die erforderliche Stabilität verloren geht. Ein Armantrieb 22, beispielsweise ein Stellzylinder, ist bei dieser Ausführungsform innerhalb eines der Gestellarme 03 vorgesehen, um den Winkel dieses Gestellarms gegenüber den beiden anderen Gestellarmen einstellen zu können. Der Winkel zwischen den beiden nicht über den Armantrieb verstellbaren Gestellarmen wird manuell eingestellt und fixiert. Bei nochmals abgewandelten Ausführungsformen könnte der benötigte Winkel zwischen allen Gestellarmen nur manuell eingestellt und fixiert werden, was die Einsatzflexibilität aber einschränkt. Weiterhin ist ersichtlich, dass bei dieser Ausführungsform ein Energiespeicher 21 in einen der als Gitterträger gebildeten Gestellarm eingesetzt ist. Ebenso können in jedem der Gestellarme Energiespeicher oder andere Komponenten eingesetzt werden.

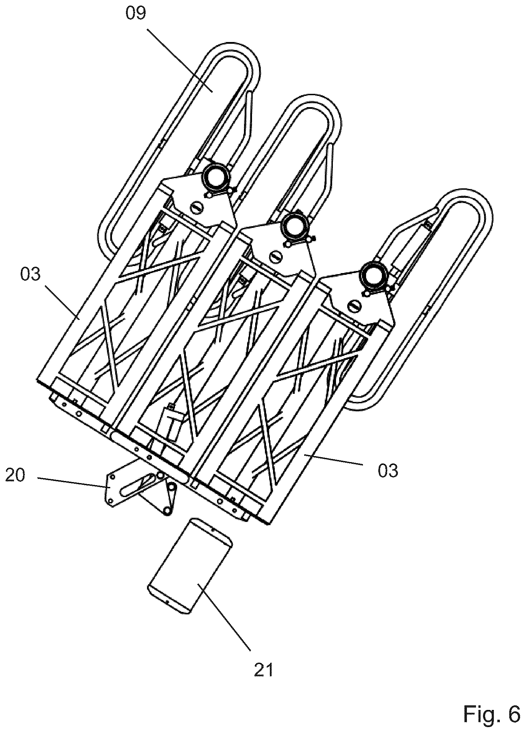

Fig. 6 zeigt die Ausführungsform gemäß Fig. 5 in einem Zustand, in welchem die Gestellarme 03 parallel zueinander liegen. Das Zentralgelenk 20 wurde dafür von den beiden außen liegenden Gestellarmen gelöst. Alternativ kann das Zentralgelenk auch so ausgebildet sein, dass ein Lösen von den Gestellarmen nicht erforderlich ist sondern stattdessen ein weites Verschwenken ermöglich ist. In diesem Zustand lässt sich das Arbeitsgerät bei minimalem Platzbedarf gut lagern oder für den Transport verstauen. Weiterhin ist erkennbar, dass im zusammengefalteten Zustand die innenliegenden Enden der beiden äußeren Gestellarme geöffnet sind, um beispielsweise den Energiespeicher 21 für Ladezwecke entnehmen zu können.

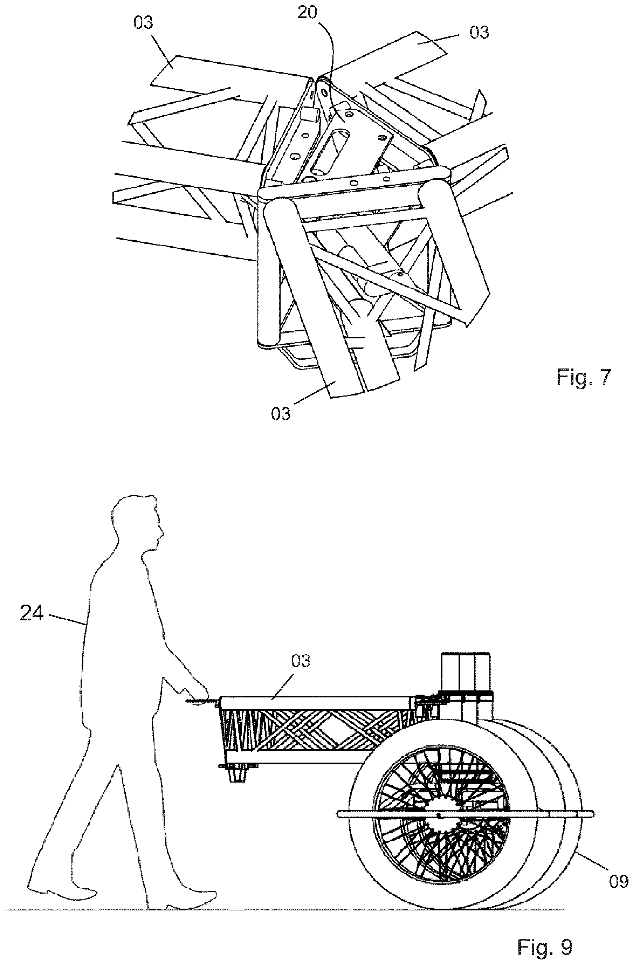

Fig. 7 zeigt das Zentralgelenk 20 mit den daran anschließenden Gestellarmen 03 in einer perspektivischen Detailansicht. Es ist ersichtlich, dass dieses Zentralgelenk in einfachen Ausführungen durch wenige plattenförmige Verbindungsplatten gebildet sein kann. Der Tragrahmen wird damit durch den Verbindungsbereich zwischen den aneinander angrenzenden Enden der Gestellarme 03 gebildet. Das Zentralgelenk gestattet die Einstellbarkeit mindestens eines der Gestellarme bezüglich seines Winkels gegenüber den beiden anderen Gestellarmen, um die Spurbreite des Arbeitsgeräts einzustellen.

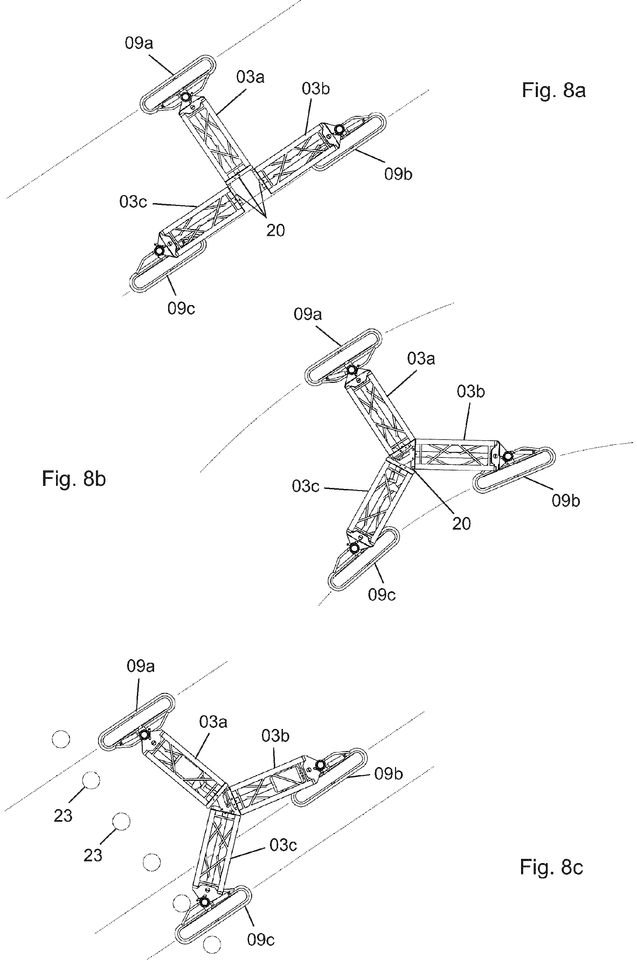

Fig. 8 zeigt in drei Abbildungen typische Beispiele der sich aus der Spurbreitenveränderung ergebenden Betriebszustände des selbstfahrenden Arbeitsgeräts.

Fig. 8a zeigt das Arbeitsgerät in einem auf zwei geraden Fahrspuren eingestellten Betriebszustand. Der erste Gestellarm 03a steht dabei im rechten Winkel gegenüber dem zweiten und dem dritten Gestellarm 03b, 03c, während sich der zweite und der dritte Gestellarm entlang einer gemeinsamen Längsachse erstrecken. Somit läuft das erste Rad 09a auf einer ersten Spur, während zweites und drittes Rad 09b, 09c auf einer gemeinsamen zweiten Spur laufen. Das Zentralgelenk 20 ist einseitig geöffnet und seine Gelenkplatten sind jeweils im Winkel von 90° angeordnet.

Fig. 8b zeigt das Arbeitsgerät in einem auf zwei gekrümmten Fahrspuren eingestellten Betriebszustand. Der erste Gestellarm 03a steht im Winkel von jeweils etwa 105° gegenüber dem zweiten und dem dritten Gestellarm 03b, 03c, während der zweite und der dritte Gestellarm einen Winkel von etwa 150° einschließen. Somit läuft das erste Rad 09a auf einer ersten gekrümmten Spur, während zweites und drittes Rad 09b, 09c auf einer gemeinsamen zweiten gekrümmten Spur laufen. Das Zentralgelenk 20 befindet sich in diesem Fall auf einer dritten gekrümmten Spur, die außermittig zwischen den beiden Fahrspuren verläuft.

Fig. 8c zeigt das Arbeitsgerät in einem auf drei geraden Fahrspuren eingestellten Betriebszustand. Der erste Gestellarm 03a steht in unterschiedlichen Winkeln gegenüber dem zweiten bzw. dem dritten Gestellarm 03b, 03c. Somit läuft das erste Rad 09a auf einer ersten geraden Spur, während das zweite Rad 09b auf einer zweiten geraden Spur läuft und das dritte Rad 09c auf einer dritten geraden Spur läuft. Die zweite Spur liegt näher an der dritten als an der ersten Spur. Das Zentralgelenk 20 befindet sich in diesem Fall auf einer vierten geraden Spur. Zum Verständnis sind mehrere Pflanzen 23 symbolisiert, die jeweils einen Pflanzabstand voneinander haben. Die Spurbreite des Arbeitsgerätes ist so gewählt, dass keines der Räder 09 mit den Pflanzen 23 kollidiert. Das Zentralgelenk 20 und die Gestellarme 03 befinden sich auf einer Höhe oberhalb der Pflanzen 23, sodass es auch hier nicht zu einer Beschädigung der Pflanzen kommt.

Fig. 9 zeigt eine Seitenansicht des Arbeitsgerätes im zusammengefalteten Zustand, wie er bereits in Fig. 6 dargestellt ist. In diesem zusammengefalteten Zustand kann das Arbeitsgerät nicht selbstständig fahren, da alle drei Räder 09 im Wesentlichen parallel stehen. Der zusammengefaltete Zustand eignet sich für die Lagerung und den Transport des Arbeitsgeräts. Zur Verdeutlichung möglicher Größenverhältnisse ist in Fig. 9 einen Benutzer 24 symbolisiert, welcher das Arbeitsgerät manuell schiebt.

### Bezugszeichenliste

- 01: Zentralgehäuse / Tragrahmen
- 02: Zentralachse
- 03: Gestellarme
- 04: Befestigungsöffnung / Koppelelement
- 05: Querverstrebung
- 06: Steuerachse
- 07: Radaufhängung
- 08: Radachse
- 09: Rad
- 10: Steuerachsenantrieb
- 11: Sensor
- 12: Sonde / Arbeitsmittel
- 13: Schmutzabstreifer
- 14: -
- 15: erste Spur
- 16: zweite Spur
- 17: Kreisspur
- 18: Behälter
- 19: -
- 20: Zentralgelenk
- 21: Energiespeicher
- 22: Armantrieb
- 23: Pflanzen
- 24: Benutzer

## Patentansprüche

1. Selbstfahrendes Arbeitsgerät zum Einsatz auf bepflanzten landwirtschaftlichen Nutzflächen mit:
- einem Tragrahmen (01);
- genau drei Gestellarmen (03), die sich ausgehend vom Tragrahmen (01) in unterschiedlichen Winkelrichtungen erstrecken, wobei mindestens ein erster Gestellarm gegenüber den beiden anderen Gestellarmen schwenkbar ist;
- drei um Radachsen (08) drehbaren Rädern (09), die jeweils an einem der Gestellarme (03) angeordnet und jeweils von einem eigenen Radantrieb angetrieben sind;
- mindestens zwei Steuerachsen (06), über welche jeweils eines der Räder an den zugehörigen Gelenkarm (03) angelenkt ist;
- mindestens zwei Steuerachsenantrieben zum Schwenken des jeweiligen Rads (09) um seine Steuerachse (06);
- eine Steuereinheit, welche die drei Radantriebe, den Armantrieb und die Steuerachsenantriebe ansteuert;
- mindestens einen Armantrieb (22), zum Schwenken des mindestens einen Gestellarms (03) gegenüber den andern Gestellarmen;
**dadurch gekennzeichnet, dass**
- alle drei Gestellarme (03) in einem vorbestimmten Winkelbereich um eine Zentralachse (02) schwenkbar sind;
- der Tragrahmen als ein Zentralgelenk (20) ausgebildet ist, welches die drei Gestellarme koppelt und das Schwenken von zwei Gestellarmen gegenüber dem dritten Gestellarm um jeweils mehr als 90° gestattet;
- die Räder (09) durch die Steuerachsenantriebe derart verschwenkbar sind, dass zwei der Räder in einer gemeinsamen ersten Spur (15) ausgerichtet sind und das dritte Rad in einer zweiten Spur (16), parallel zur ersten Spur ausgerichtet ist.

2. Arbeitsgerät nach Anspruch 1, **dadurch gekennzeichnet, dass** der Armantrieb selektiv an jeweils einen der Gestellarme (03) oder an mehrere der Gestellarme (03) koppelbar ist, um diese zum Schwenken um die Zentralachse (02) anzutreiben.

3. Arbeitsgerät nach Anspruch 1, **dadurch gekennzeichnet, dass** die Armantriebe derart ansteuerbar sind, dass der Abstand zwischen der ersten und der zweiten Spur, d. h. die Spurbereite veränderlich ist.

4. Arbeitsgerät nach einem der Ansprüche 1 bis 3, **dadurch gekennzeichnet, dass** die Räder (09) durch die Steuerachsenantriebe derart verschwenkbar sind, dass alle drei Räder in einer gemeinsamen Kreisspur (17) ausgerichtet sind.

5. Arbeitsgerät nach einem der Ansprüche 1 bis 4, **dadurch gekennzeichnet, dass** die Radantriebe als Nabenmotoren ausgeführt sind.

6. Arbeitsgerät nach einem der Ansprüche 1 bis 5, **dadurch gekennzeichnet, dass** am Tragrahmen (01) Koppelelemente (04) angebracht sind, welche der Ankopplung von Magazinen, Werkzeugen und/oder sonstigen Arbeitsmitteln (12, 18) dienen.

7. Arbeitsgerät nach einem der Ansprüche 1 bis 6, **dadurch gekennzeichnet, dass** der Tragrahmen ein Zentralgehäuse (01) umfasst, von welchem sich die drei Gestellarme (03) radial nach außen erstrecken, wobei die Zentralachse (02) durch das Zentralgehäuse (01) verläuft und wobei der Armantrieb im Zentralgehäuse (01) angeordnet ist.

8. Arbeitsgerät nach einem der Ansprüche 1 bis 7, **dadurch gekennzeichnet, dass** die drei Steuerachsen (06) parallel zueinander und parallel zur Zentralachse (02) verlaufen, und dass der Tragrahmen (01) oberhalb der Radachsen (08) positioniert ist, sodass zwischen dem Tragrahmen und der Aufstandsfläche der Räder ein Freiraum verbleibt.

9. Arbeitsgerät nach einem der Ansprüche 1 bis 8, **dadurch gekennzeichnet, dass** es einen Energiespeicher umfasst, der vorzugsweise lösbar am Trägerfahrzeug befestigt ist.

10. Arbeitsgerät nach Anspruch 9, **dadurch gekennzeichnet, dass** es eine Solarzelle, eine Brennstoffzelle und/oder einen elektrischen Generator umfasst, welche den Energiespeicher speisen.

11. Arbeitsgerät nach Anspruch 1, **dadurch gekennzeichnet, dass** die Gestellarme längenveränderlich sind.

12. Arbeitsgerät nach Anspruch 1, **dadurch gekennzeichnet, dass** ein einzelner oder mehrere Gestellarme gegen Gestellarme mit anderen Längen austauschbar sind.

13. Arbeitsgerät nach Anspruch 1, **dadurch gekennzeichnet, dass** die Zentralachse (02) senkrecht durch die Haupterstreckungsebene des Tragrahmens (01) verläuft.

14. Arbeitsgerät nach Anspruch 1, **dadurch gekennzeichnet, dass** Räder (09) an den äußeren Enden der Gestellarme (03) jeweils höhenverstellbar gelagert sind, um jedes Rad relativ zu den beiden anderen Rädern in seiner horizontalen Position zu verändern.

15. Arbeitsgerätegruppe aus mindestens zwei selbstfahrenden Arbeitsgeräten gemäß einem der Ansprüche 1 bis 14, die mechanisch und/oder über eine Datenverbindung miteinander gekoppelt sind, um aufeinander abgestimmt auf einer landwirtschaftlichen Nutzfläche verfahrbar zu sein.

## Claims

1. A self-propelled implement for use on planted agriculturally productive land, having:
- a supporting frame (01);
- exactly three frame arms (03), which extend in different angular directions starting from the supporting frame (01), at least one first frame arm being pivotable with respect to the two other frame arms;
- three wheels (09), which are rotatable about wheel axles (08) and are in each case arranged on one of the frame arms (03) and in each case driven by their own wheel drive;
- at least two control axes (06), by means of which in each case one of the wheels is linked to the associated articulated arm (03);
- at least two control axle drives for pivoting the respective wheel (09) about its control axle (06) ;
- a control unit, which activates the three wheel drives, the arm drive and the control axle drives;
- at least one arm drive (22), for pivoting the at least one frame arm (03) with respect to the other frame arms;
**characterized in that**
- all three frame arms (03) are pivotable in a predetermined angular range about a central pivot (02) ;
- the supporting frame is constructed as a central joint (20), which couples the three frame arms and allows the pivoting of two frame arms with respect to the third frame arm by more than 90° in each case;
- the wheels (09) are pivotable by the control axle drives in such a manner that two of the wheels are aligned in a common first track (15) and the third wheel is aligned in a second track (16) parallel to the first track.

2. The implement according to Claim 1, **characterized in that** the arm drive can be selectively coupled to in each case one of the frame arms (03) or to a plurality of the frame arms (03), in order to drive the same for pivoting about the central pivot (02).

3. The implement according to Claim 1, **characterized in that** the arm drives can be activated in such a manner that the distance between the first and the second track, i.e. the track width, is variable.

4. The implement according to one of Claims 1 to 3, **characterized in that** the wheels (09) are pivotable by means of the control axle drives in such a manner that all three wheels are aligned in a common circular track (17).

5. The implement according to one of Claims 1 to 4, **characterized in that** the wheel drives are designed as hub motors.

6. The implement according to one of Claims 1 to 5, **characterized in that** coupling elements (04) are attached to the supporting frame (01), which are used for coupling magazines, tools and/or other work equipment (12, 18).

7. The implement according to one of Claims 1 to 6, **characterized in that** the supporting frame comprises a central housing (01), from which the three frame arms (03) extend radially outwards, wherein the central pivot (02) runs through the central housing (01) and wherein the arm drive is arranged in the central housing (01).

8. The implement according to one of Claims 1 to 7, **characterized in that** the three control axles (06) run parallel to one another and parallel to the central pivot (02) and **in that** the supporting frame (01) is positioned above the wheel axles (08), so that a free space remains between the supporting frame and the contact area of the wheels.

9. The implement according to one of Claims 1 to 8, **characterized in that** it comprises an energy storage device, which is preferably fastened to the carrier vehicle in a detachable manner.

10. The implement according to Claim 9, **characterized in that** it comprises a solar cell, a fuel cell and/or an electric generator, which feed the energy storage device.

11. The implement according to Claim 1, **characterized in that** the frame arms have an adjustable length.

12. The implement according to Claim 1, **characterized in that** a single frame arm or a plurality of frame arms can be exchanged with frame arms with different lengths.

13. The implement according to Claim 1, **characterized in that** the central pivot (02) runs perpendicularly through the main plane of extension of the supporting frame (01).

14. The implement according to Claim 1, **characterized in that** wheels (09) are mounted at the outer ends of the frame arms (03) in a respectively height-adjustable manner, in order to change each wheel relatively to the two other wheels in terms of its horizontal position.

15. An implement group made from at least two self-propelled implements according to one of Claims 1 to 14, which are coupled to one another mechanically and/or via a data connection, in order to be movable on agriculturally productive land in a coordinated manner.

## Revendications

1. Engin de travail automoteur, destiné à l'utilisation sur des surfaces agricoles utiles végétalisées, comprenant :
- un cadre porteur (01) ;
- exactement trois bras de châssis (03), qui en partant du cadre porteur (01) s'étendent dans différentes directions angulaires, au moins un premier bras de châssis étant susceptible de pivoter par rapport aux deux autres bras de châssis ;
- trois roues (09) rotatives autour d'axes de roue (08), dont chacune est placée sur l'un des bras de châssis (03) et est entraînée par un propre entraînement de roue ;
- au moins deux axes de commande (06), par l'intermédiaire desquels chaque fois l'une des roues est articulée sur le bras articulé (03) ;
- au moins deux entraînements d'axe de commande, destinés à faire pivoter la roue (09) concernée autour de son axe de commande (06) ;
- une unité de commande, laquelle actionne les trois entraînements de roue, l'entraînement de bras et les entraînements d'axe de commande ;
- au moins un entraînement de bras (22), destiné à faire pivoter l'au moins un bras de châssis (03) par rapport aux autres bras de châssis ;
**caractérisé en ce que**
- tous les trois bras de châssis (03) sont susceptibles de pivoter dans une plage angulaire prédéfinie autour d'un axe central (02) ;
- le cadre porteur est conçu sous la forme d'une articulation centrale (20), laquelle accouple les trois bras de châssis et admet le pivotement de respectivement plus de 90° de deux bras de châssis par rapport au troisième bras de châssis ;
- les roues (09) sont susceptibles d'être pivotées par les entraînements d'axe de commande, de telle sorte que deux des roues soient orientées dans une première voie (15) commune et que la troisième roue soit orientée dans une deuxième voie (16), à la parallèle de la première voie.

2. Engin de travail selon la revendication 1, **caractérisé en ce que** l'entraînement de bras peut s'accoupler sélectivement sur chaque fois l'un des bras de châssis (03) ou sur plusieurs des bras de châssis (03), um pour les entraîner en pivotement autour de l'axe central (02).

3. Engin de travail selon la revendication 1, **caractérisé en ce que** les entraînements de bras sont susceptibles d'être actionnés de telle sorte que l'écart entre la première et la deuxième voie, c'est-à-dire que la largeur de voie soit variable.

4. Engin de travail selon l'une quelconque des revendications 1 à 3, **caractérisé en ce que** les roues (09) sont susceptibles d'être pivotées par les entraînements d'axe de commande de telle sorte que toutes les trois roues soient orientées dans une voie circulaire (17) commune.

5. Engin de travail selon l'une quelconque des revendications 1 à 4, **caractérisé en ce que** les entraînements de roue sont réalisés sous la forme de moteurs de moyeu.

6. Engin de travail selon l'une quelconque des revendications 1 à 5, **caractérisé en ce que** sur le cadre porteur (01) sont montés des éléments d'accouplement (04), qui servent à accoupler des magasins, des outils et / ou d'autres équipements de travail (12, 18).

7. Engin de travail selon l'une quelconque des revendications 1 à 6, **caractérisé en ce que** le cadre porteur comprend un carter central (01), à partir duquel les trois bras de châssis (03) s'étendent en direction radiale vers l'extérieur, l'axe central (02) s'écoulant à travers le carter central (01) et l'entraînement de bras étant placé dans le carter central (01).

8. Engin de travail selon l'une quelconque des revendications 1 à 7, **caractérisé en ce que** les trois axes de commande (06) s'écoulent à la parallèle l'un de l'autre et à la parallèle de l'axe central (02), et **en ce que** le cadre porteur (01) est placé au-dessus des axes de roue (08), de telle sorte qu'un espace libre reste ménagé entre le cadre porteur et l'empreinte au sol des roues.

9. Engin de travail selon l'une quelconque des revendications 1 à 8, **caractérisé en ce qu'**il comprend un accumulateur d'énergie, qui est fixé de préférence de manière amovible sur le véhicule porteur.

10. Engin de travail selon la revendication 9, **caractérisé en ce qu'**il comprend une pile solaire, une pile à combustible et / ou un générateur électrique, lesquels alimentent l'accumulateur d'énergie.

11. Engin de travail selon la revendication 1, **caractérisé en ce que** les bras de châssis sont à longueur variable.

12. Engin de travail selon la revendication 1, **caractérisé en ce qu'**un bras de châssis individuel ou plusieurs sont interchangeables avec des bras de châssis d'autres longueurs.

13. Engin de travail selon la revendication 1, **caractérisé en ce que** l'axe central (02) s'écoule à la perpendiculaire à travers le plan d'extension principal du cadre porteur (01).

14. Engin de travail selon la revendication 1, **caractérisé en ce que** des roues (09) sont logées en étant chacune ajustable en hauteur sur des extrémités extérieures des bras de châssis (03), pour faire varier chaque roue dans sa position horizontale par rapport aux deux autres roues.

15. Groupe d'engins de travail, constitué d'au moins deux engins de travail automoteurs selon l'une quelconque des revendications 1 à 14, qui sont accouplés l'un à l'autre par moyen mécanique et / ou par une connexion de données, pour être déplaçables en synchronisation réciproque sur une surface utile agricole.
